# FASCICULE DE BREVET EUROPEEN

(11) **EP 0 418 168 B1**
(45) Date de publication et mention de la délivrance du brevet: **07.12.1994**
(21) Numéro de dépôt: 90402548.3
(22) Date de dépôt: 14.09.1990
(51) Int. Cl.: H04M 11/00

(54) **Dispositif de surveillance à distance de l'alimentation en courant d'un appareil électrique**
Vorrichtung zur Fernüberwachung der Stromversorgung eines elektrischen Gerätes
Remote monitoring device for monotoring the power supply of an electrical apparatus

(30) Priorité: 15.09.1989 FR 8912145
(43) Date de publication de la demande: 20.03.1991
(73) Titulaire: Girard, François Marie, F-21000 Dijon (FR)
(72) Inventeur: Girard, François Marie, F-21000 Dijon (FR)
(74) Mandataire: Bruder, Michel

(56) Documents cités:
- WO-A-87/07105
- CH-A- 588 132
- CH-A- 604 300
- US-A- 3 922 490
- US-A- 4 028 688
- US-A- 4 777 479

## Description

La présente invention concerne un dispositif permettant de surveiller à distance l'alimentation en courant électrique d'un appareil, par exemple un appareil électroménager tel qu'un congélateur.

On connaît des appareils qui, à l'aide de moyens électroniques appropriés permettent, par l'intermédiaire du réseau téléphonique, d'appeler un correspondant pour lui délivrer un message précédemment enregistré, à la suite de la manifestation d'un événement, et particulièrement de la coupure du courant d'alimentation d'un appareil électrique.

Outre le fait que ces appareils, en raison de la complexité de leur constitution, sont d'un prix de revient relativement élevé, ils présentent, de plus, l'inconvénient de déclencher l'appel à distance au moment où survient l'événement, si bien que, quelque temps après la manifestation de celui-ci, l'utilisateur n'a pas de moyens de savoir si l'événement en question continue à se manifester ou a été interrompu. Or l'utilisateur n'est pas, bien évidemment, constamment à portée d'un poste téléphonique, si bien que les moyens de surveillance ci-dessus mentionnés ne sont pas d'une totale efficacité.

On connaît également par le brevet US-A-3 992 490 un dispositif de transmission à distance de données utilisant les lignes téléphoniques. Cependant un tel dispositif est d'une part, conçu pour ne pas interférer avec l'utilisation normale du téléphone et d'autre part ne permet pas de détecter un changement d'état aux bornes d'alimentation d'un appareil électrique au secteur.

La présente invention a pour but un dispositif du type précité, de constitution particulièrement simple, et donc d'un prix de revient relativement modique, ne faisant pas appel à des circuits électroniques sophistiqués, ce qui lui confère une grande fiabilité, et qui permette, par interrogation du réseau téléphonique, de savoir si l'alimentation en courant d'un appareil électrique alimenté par le secteur, particulièrement un appareil électroménager, est ou a été interrompue pendant un temps donné.

A cet effet ce dispositif de surveillance à distance du changement d'état de l'alimentation en courant par le secteur d'un appareil électrique au moyen d'une ligne téléphonique est caractérisé en ce qu'il comprend des moyens de détection de la présence ou de l'absence de courant du secteur aux bornes d'alimentation de l'appareil électrique, des moyens de commande, déclenchés par les moyens de détection, lorsque survient un changement d'état dans l'alimentation dudit appareil électrique, des moyens de commutation, aptes à mettre la ligne téléphonique soit en une première position libre soit en une seconde position occupée, les moyens de commande agissant sur les moyens de commutation pour inverser la position de la ligne téléphonique lorsque les moyens de détection détectent un changement d'état de l'alimentation dudit appareil électrique par le courant du secteur.

La présente invention est ainsi basée sur l'utilisation d'une spécificité des lignes téléphoniques et consistant, pour avertir de l'occupation d'un poste téléphonique déterminé, à connecter entre deux bornes spécifiques une résistance de charge d'une valeur donnée, se situant entre 500 et 1200 ohms.

Dans une variante intéressante de l'invention, le dispositif est pourvu d'un moyen de temporisation ne maintenant la connexion de la résistance de charge qu'après la manifestation d'une coupure de courant de durée déterminée, réglable éventuellement par l'utilisateur, en fonction de l'appareil sur lequel il est utilisé. Par exemple dans le cas de l'utilisation du présent dispositif avec un congélateur, la durée de temporisation sera de l'ordre de quelques heures, c'est-à-dire correspondant au temps moyen pendant lequel des aliments congelés peuvent être stockés dans un congélateur, non alimenté en courant, avant que ne se manifeste le processus de décongélation.

On décrira ci-après, à titre d'exemples non limitatifs, diverses formes d'exécution de la présente invention, en référence au dessin annexé sur lequel :

La figure 1 est une vue schématique d'une première forme de réalisation du circuit électronique d'un dispositif suivant l'invention.

La figure 2 est une vue schématique d'une variante de réalisation du circuit électronique d'un dispositif suivant l'invention, comportant des moyens d'alimentation en courant continu des moyens de détection.

La figure 3 est une vue schématique d'une variante de réalisation des moyens de détection et de commande du dispositif suivant l'invention.

La figure 4 est une vue schématique représentant l'agencement de différents blocs électroniques constituant une variante d'un dispositif suivant l'invention.

La figure 5 est une vue détaillée de chacun des différents blocs électroniques constituant le dispositif de la figure 4.

La figure 6 est une variante du bloc logique de la figure 5.

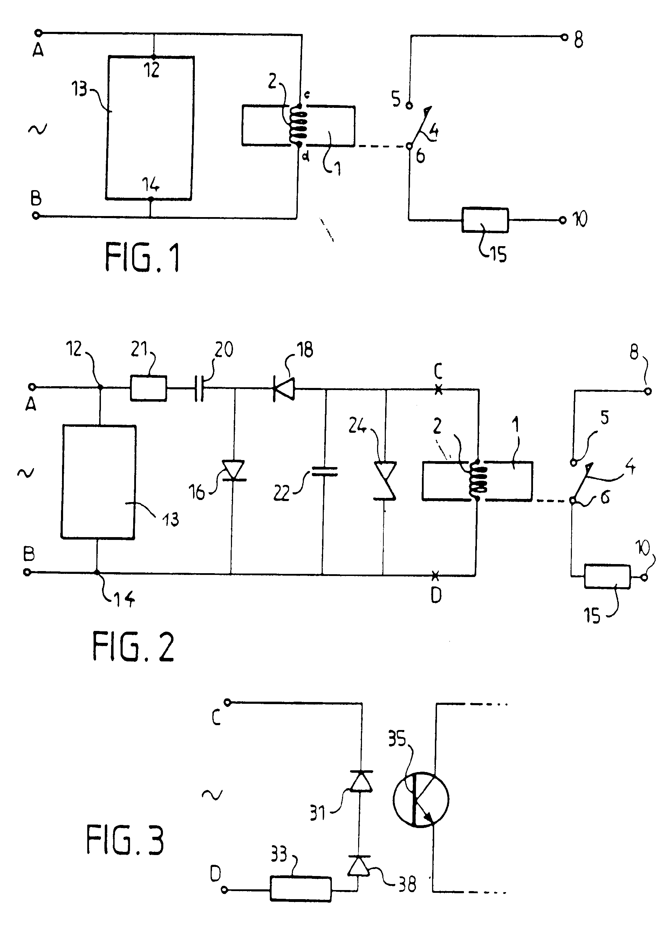

Sur la figure 1 qui représente la réalisation la plus simple d'un dispositif de surveillance à distance suivant l'invention, un appareil 13, tel que par exemple un congélateur, dont on souhaite contrôler à distance le bon fonctionnement, est relié, par ses bornes d'alimentation 12 et 14, au réseau électrique alternatif (Bornes A et B). La bobine 2 d'un relais 1 est branchée en parallèle par ses bornes c et d sur les bornes A et B dudit réseau électrique. Ce relais 1 comporte des moyens interrupteurs 4 qui constituent les moyens de commutation, eux-même constitués de deux contacts 5 et 6, en contact à l'état repos, c'est-à-dire lorsque le relais n'est pas excité, si bien que dans cette position le circuit électrique est fermé, alors qu'il est ouvert (Fig.1) lorsque le relais est alimenté en courant. Les contacts 5 et 6 sont connectés aux bornes 8 et 10 du faisceau de fils téléphoniques entre lesquels est appliquée une tension continue de 48 Volts. Une résistance 15 d'une valeur de 1000 ohms est disposée en série dans le circuit constitué par la borne 8, les contacts 5 et 6 et la borne 10.

En conséquence lorsque le courant du réseau est présent, aux bornes c et d de son bobinage 2, le relais 1 se trouve en position activée et les bornes 5 et 6 (figure 1) ne sont pas en contact. Dans ces conditions la résistance de charge 15 n'est pas reliée aux bornes 8 et 10, et en conséquence le signal "occupé" n'est pas en fonction sur la ligne téléphonique, et le poste téléphonique aux bornes duquel est connecté le présent dispositif émet, lorsqu'on l'appelle à partir d'un autre poste téléphonique, le signal caractéristique "libre".

Lorsque, le courant fourni par le secteur est interrompu, le bobinage 2 du relais 1 n'est plus alimenté en courant, et passe en position de repos, et ses contacts 5 et 6 sont alors reliés, provoquant la connexion de la résistance de charge 15 aux bornes 8 et 10 du réseau téléphonique. Dans ces conditions le poste téléphonique aux bornes duquel est connecté le présent dispositif émet, lorsqu'on l'appelle à partir d'un autre poste, le signal caractéristique "occupé".

L'utilisateur, a ainsi la faculté d'interroger la ligne téléphonique à laquelle est connecté le présent dispositif, et le signal "libre" ou "occupé" le renseignera sur l'état alimenté ou non du dispositif et donc de l'appareil 13 avec lequel il est connecté en parallèle.

Bien entendu le présent dispositif peut être utilisé avec tout type d'appareil autre que les appareils électroménagers, et permet de savoir, à distance, sur un simple appel téléphonique si un appareil déterminé est ou non alimenté par le secteur.

Afin de réaliser une meilleure stabilisation du relais 1, et comme représenté sur la figure 2, on alimente celui-ci par l'intermédiaire de moyens de redressement du courant constitués, de façon connue, de diodes de redressement 16 et 18 et d'un condensateur de filtrage 22. Une impédance chutrice constituée d'une résistance 21 et d'un condensateur 20 abaisse la tension qui est ensuite stabilisée par une diode zener 24. La tension redressée filtrée et stabilisée à 12 V, disponible entre les points C et D, est appliquée au bobinage 2, d'un relais 1. Celui-ci actionne, de la façon décrite précédemment, des contacts 5,6 qui se touchent au repos, c'est-à-dire lorsque le relais n'est pas excité. Le fonctionnement d'un tel dispositif se fait comme décrit précédemment.

Sur la figure 3 les moyens de détection et de commande sont constitués d'une diode photoémissive 31, dite "LED", qui prend la place du bobinage du relais, et qui est connectée, au travers d'une résistance chutrice de tension 33 et d'une diode de redressement 38, aux deux bornes C et D délivrant une basse tension stabilisée. La lumière émise par cette diode 31, lorsque le dispositif est alimenté en courant par le secteur, est captée par des moyens de commutation constitués d'un phototransistor 35, dont l'émetteur et le collecteur sont connectés à un circuit électronique approprié, à haute impédance, alimenté par la tension de 48 Volts, du réseau téléphonique. Ce dispositif permet d'assurer un découplage quasiment parfait des deux circuits électrique et téléphonique.

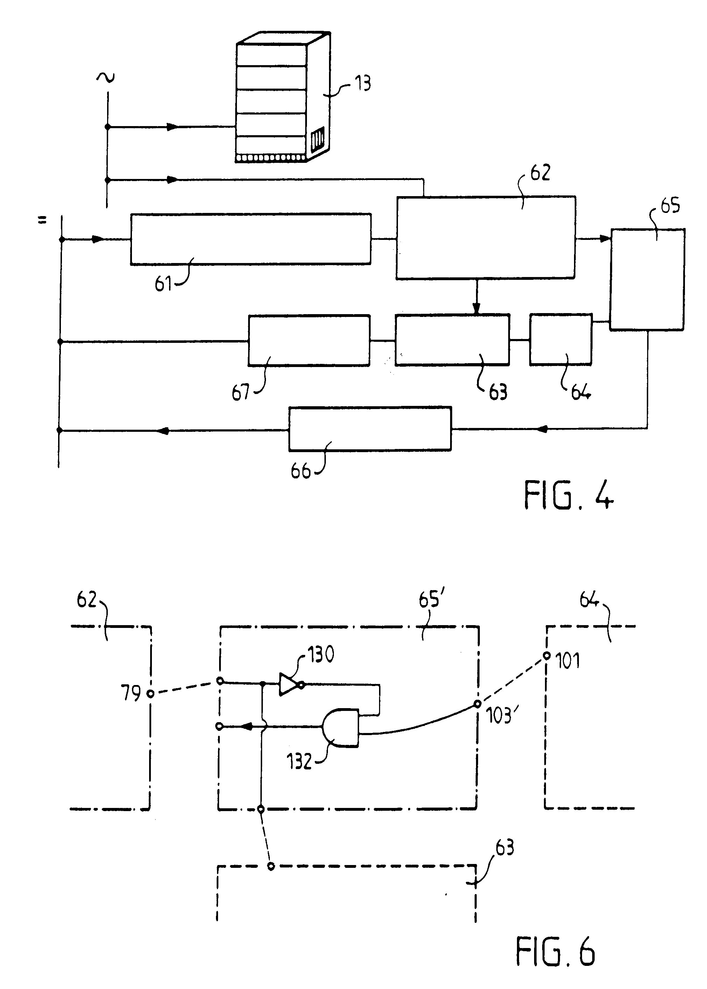

Sur les figures 4 à 6 des moyens de temporisation sont prévus. Le dispositif de surveillance comprend ainsi une série de blocs électroniques à savoir un bloc redresseur-régulateur 61, un bloc de détection de l'absence de courant secteur 62, un bloc oscillateur 63, un bloc compteur 64, un bloc logique de commande 65, un bloc de commutation 66 et un bloc de remise à zéro des compteurs 67.

Le bloc 61 est constitué, de façon connue, d'une diode de redressement 70 et d'une cellule de filtrage constituée d'une diode zéner 71 d'un condensateur de filtrage 72 et d'une résistance 73. On notera qu'un tel redressement est nécessaire en raison de ce que cette ligne véhicule, outre une tension continue, une tension de sonnerie qui, elle, possède une série de composantes alternatives.

Le bloc de détection d'absence de courant secteur 62 est constitué d'un circuit du type de celui décrit à la figure 3, mais comporte de plus entre le collecteur d'un transistor 36 et la masse une résistance 75, et un condensateur de lissage 77, disposé entre la base du phototransistor 36 et la sortie 79 du bloc 62. De plus la diode émettrice 31 et le phototransistor 36 sont disposés dans un même boîtier et constituent un optocoupleur 39.

Le bloc oscillateur 63 est constitué, de façon connue, de deux portes NON ET 83 et 85 associées à des résistances 87 et 89 et des condensateurs 91 et 93. La résistance 89 est ajustable et permet de faire varier la fréquence de l'oscillateur. Le bloc oscillateur comporte une entrée 94, reliée au bloc logique 65 commandant la mise en route et l'arrêt de l'oscillateur et une borne de sortie 95 reliée au bloc compteur 64.

Le bloc compteur 64 est ici constitué de deux compteurs identiques, un compteur amont 97 et un compteur aval 99. L'entrée horloge du compteur amont est reliée à la sortie 95 du bloc oscillateur 63 et sa sortie est reliée à l'entrée horloge du compteur aval 99, et la sortie 101 de celui-ci est reliée à l'entrée 103 du bloc logique 65. Les deux bornes 105 de remise à zéro des compteurs 97 et 99 sont reliées à la sortie 107 du bloc de remise à zéro 67.

Le bloc de logique de commande 65 est constitué de deux portes NON ET 109 et 111. L'une des entrées de la porte 111 est reliée à une source de tension d'alimentation continue Vcc et est donc en permanence à un potentiel positif, et son autre entrée est reliée à la sortie 101 du bloc compteur 64. La sortie de la porte 111 est reliée, au travers d'une résistance de limitation de courant 113 et une diode 115 à l'entrée 117 du bloc de commutation 66 au travers d'une seconde résistance de limitation de courant 119. L'une des entrées 110 de la porte 109 est reliée à la sortie 79 du bloc de détection d'absence de courant secteur 62, et son autre borne 112 est reliée à la sortie de la porte 111.

Le bloc de commutation 66 est constitué d'un transistor de commutation 121 dont la base est reliée à l'entrée 117 du bloc, et l'émetteur est relié à l'une des bornes 10 du circuit téléphonique et le collecteur est relié à l'autre borne 8 du circuit téléphonique au travers d'une résistance de charge 123 d'environ 1200 ohms.

Afin de simplifier les explications se rapportant au fonctionnement du présent dispositif, il est entendu que, dans la suite du présent texte, on désignera une borne comme étant à 0 ou à 1 lorsque cette borne sera respectivement à un potentiel égal à zéro et à un potentiel positif, par rapport à la masse du circuit.

Dans ces conditions le fonctionnement du présent dispositif s'établit comme suit : lorsque le circuit vient d'être raccordé aux bornes 8 et 10 précisées précédemment de la ligne téléphonique, le bloc de remise à zéro 67 génère sur sa borne 107 une impulsion mettant à zéro les compteurs 97 et 99, et la borne de sortie 101 du bloc compteur 64 vient à 0. En conséquence la sortie de la porte NON ET 111, et donc la seconde entrée 112 de la porte NON ET 109, vient à 1. Lorsque le courant du secteur est présent aux bornes A et B du circuit, la diode électroluminescente 31 émet un rayonnement capté par le phototransistor 35 qui est dès lors conducteur et qui met à 1 l'entrée 110 de la porte NON ET 109. La seconde entrée de cette porte NON ET étant également à 1, sa sortie se trouve alors à 0 et le transistor 121 du bloc de commutation 66 n'est donc pas conducteur. La résistance de charge 123 n'est donc pas connectée aux bornes 8 et 10 du réseau téléphonique.

Lorsque le courant du secteur est coupé, la diode électroluminescente 31 n'étant plus alimentée en courant, elle n'éclaire plus, et le phototransistor 35 ne conduit plus, si bien que l'entrée 110 du circuit NON ET 109 se trouve alors à 0. La sortie de cette porte NON ET 109 est donc à 1 ce qui rend conducteur le transistor de commutation 121, et dès lors, la résistance de charge 123 se trouve connectée aux bornes 8 et 10 du réseau téléphonique, simulant ainsi l'occupation de la ligne. Dans ce même temps l'oscillateur est mis en route et envoie des impulsions, avec une fréquence dépendant de la valeur de la résistance réglable 89, vers le compteur 97.

Si le rétablissement du secteur intervient avant que le compteur 99 ait reçu de l'oscillateur un nombre d'impulsions suffisant pour le bloquer et amener sa sortie 101 à 1, la borne de sortie du circuit NON ET 109 revient à 0, et la résistance de charge 123 est déconnectée, remettant ainsi la ligne téléphonique en mode "libre".

Si une nouvelle interruption de secteur survient, le processus précédent se déclenche à nouveau et les compteurs 97-98 enregistrent un nombre d'impulsions supplémentaires, s'ajoutant aux impulsions entrées précédemment. Lorsque, suite à une durée d'interruption déterminée le compteur 99 arrive à son comptage maximum, sa sortie 101 passe 1 ainsi donc que la seconde entrée de la porte NON ET 111. La sortie de celle-ci passe donc à 0, ainsi que l'entrée 112 de la porte NON ET 109. La sortie de celle-ci passe donc à 1 et le transistor de commutation 121 se trouve dès lors alimenté et passe à l'état conducteur ce qui commute la résistance de charge 123 aux bornes 8 et 10 de la ligne téléphonique.

On remarquera que, quelque soit alors la situation de l'entrée 110 de la porte NON ET 109, la sortie de celle-ci reste à 1 et le transistor de commutation 121 est bloqué en position de conduction et la simulation de position "occupée" persiste, jusqu'à ce que les compteurs 97 et 99 soient remis à zéro, ce qui se réalise en débranchant le dispositif de la prise téléphonique.

L'utilisateur sait donc ainsi que, soit le courant vient d'être coupé aux bornes de son appareil, soit que le courant a été coupé pendant au moins une durée égale à la temporisation qu'il a réglée, au moyen de la résistance ajustable 89.

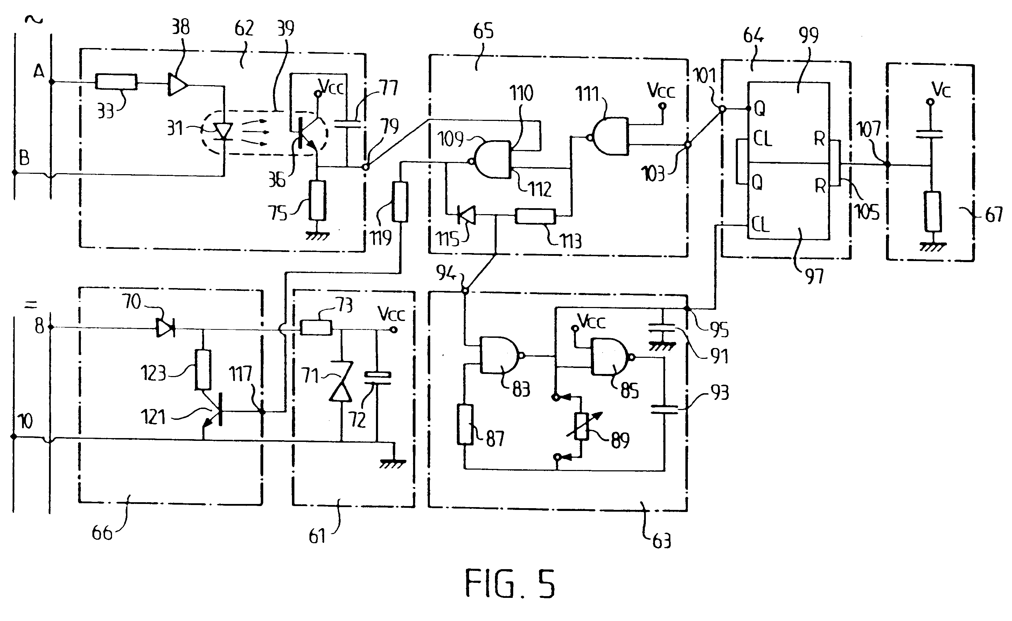

On pourrait également remplacer le module de logique de commande 65 de la figure 5 par un module 65′, représenté sur la figure 6, et permettant de ne commuter la ligne téléphonique en position "occupée" qu'après une coupure d'une durée déterminée.

Ainsi sur la figure 6 la sortie 79 du bloc de détection d'absence de courant secteur 62 est reliée à l'entrée d'un inverseur 130, dont la sortie est reliée à l'une des entrées d'une porte ET 132, l'autre entrée de cette porte ET étant reliée à l'entrée 103′ du bloc 65′, elle-même reliée à la sortie 101 du bloc compteur 64. Ainsi, lorsque le courant secteur est coupé le potentiel à la sortie 79 du bloc 62 passe, comme vu précédemment, à 0 ce qui met en route l'oscillateur et fait passer la sortie de l'inverseur 130 à 1. Dans ces conditions dès que la sortie du bloc compteur 64 passe à 1, ce qui se produit au bout d'un temps donné réglé par l'utilisateur, la sortie de la porte ET 132 passe à 1 et la commutation de la résistance de charge 123 s'effectue comme décrit précédemment.

## Revendications

1. Dispositif de surveillance à distance du changement d'état de l'alimentation en courant par le secteur d'un appareil électrique au moyen d'une ligne téléphonique (8,10) caractérisé en ce qu'il comprend :
- des moyens de détection (2,31,62) de la présence ou de l'absence de courant du secteur aux bornes d'alimentation (12,14) de l'appareil électrique (13),
- des moyens de commande (2,31,65), déclenchés par les moyens de détection (2,31,62) lorsque survient un changement d'état dans l'alimentation dudit appareil électrique (14),
- des moyens de commutation, (4,35,66) aptes à mettre la ligne téléphonique (8,10) soit en une première position libre soit en une seconde position occupée,
les moyens de commande (2,31,65) agissant sur les moyens de commutation (4,35,66) pour inverser la position de la ligne téléphonique lorsque les moyens de détection détectent un changement d'état de l'alimentation dudit appareil électrique (14) par le courant du secteur.

2. Dispositif suivant la revendication 1 caractérisé en ce que les moyens de détection (2,31,62) sont isolés électriquement des susdits moyens de commutation (4,35,66).

3. Dispositif suivant l'une quelconque des revendications précédentes caractérisé en ce que les moyens de commutation (4,35,66) relient une résistance électrique (15,123) de valeur appropriée aux bornes (8,10) du réseau téléphonique fournissant la position occupée.

4. Dispositif suivant la revendication 3 caractérisé en ce que la résistance électrique (15,123) est connectée lorsque le courant du secteur est coupé.

5. Dispositif suivant la revendication 1 caractérisé en ce que les moyens de détection de la présence de courant aux bornes de l'appareil électrique (14) sont constitués d'un moyen émetteur de rayonnements (31).

6. Dispositif suivant la revendication 5 caractérisé en ce que le moyen émetteur de rayonnements est une diode (31) photoémissive.

7. Dispositif suivant la revendication 1 caractérisé en ce que les moyens de commande comportent un phototransistor (36).

8. Dispositif suivant la revendication 1 caractérisé en ce que les moyens de détection (31) et de commande (35) constituent d'un optocoupleur.

9. Dispositif suivant la revendication 1 caractérisé en ce que l'alimentation électrique des moyens de commande (2,31,65) et/ou de commutation (4,35,66) est réalisée par la ligne téléphonique (8,10) basse tension.

10. Dispositif suivant la revendication 9 caractérisé en ce qu'il comporte des moyens de redressement (70) de filtrage (72,73) et de stabilisation (71) de la tension fournie par la ligne téléphonique.

11. Dispositif suivant la revendication 1 caractérisé en ce que les moyens de détection (62) et de commande (65) sont associés à des moyens de temporisation (63,64).

12. Dispositif suivant la revendication 11 caractérisé en ce que les moyens de temporisation (63,64) sont constitués d'un oscillateur, réglable en fréquence, alimentant des moyens de comptage (97,99).

13. Dispositif suivant la revendication 11 caractérisé en ce qu'il comporte des moyens de logique électronique (65) permettant d'assurer la connexion de la résistance de charge (123), après l'écoulement d'un temps donné dont le début correspond à l'instant de la disparition du courant du secteur.

14. Dispositif suivant la revendication 11 caractérisé en ce qu'il comporte des moyens de logique électronique (65) permettant d'assurer la connexion des moyens de commutation, après l'écoulement d'un temps donné, ce temps commençant à l'instant de la première coupure du secteur survenant après la connexion du dispositif sur la ligne téléphonique, et comprenant les temps relatifs aux durées de coupure de courant ultérieures éventuelles.

## Patentansprüche

1. Vorrichtung zur Fernüberwachung der Änderung des Zustands der Netzstromversorgung eines elektrischen Geräts mittels einer Telefonleitung (8, 10),
**gekennzeichnet durch**:
- Erfassungseinrichtungen (2, 31, 62), welche feststellen, ob an den Anschlußklemmen (12, 14) des elektrischen Geräts (13) Netzspannung anliegt,
- Steuereinrichtungen (2, 31, 65), die von der Erfassungseinrichtungen (2, 31 62) ausgelöst werden, wenn eine Zustandsänderung der Netzstromversorgung des elektrischen Geräts (13) auftritt,
- Umschalteinrichtungen (4, 35, 66), die geeignet sind, die Telefonleitung (8, 10) entweder in einen ersten, Frei-Zustand, oder in einen zweiten, Besetzt-Zustand zu bringen,
wobei die Steuereinrichtungen (2, 31, 65) auf die Umschalteinrichtungen (4, 35, 66) wirken, um den Zustand der Telefonleitung umzuschalten, wenn die Erfassungseinrichtungen eine Zustandsänderung der Netzstromversorgung des elektrischen Geräts (13) erkennen.

2. Vorrichtung nach Anspruch 1, **dadurch gekennzeichnet, daß** die Erfassungseinrichtungen (2, 31, 62) von den Umschalteinrichtungen (4, 35, 66) elektrisch isoliert sind.

3. Vorrichtung nach einem der vorstehenden Ansprüche, **dadurch gekennzeichnet, daß** die Umschalteinrichtungen (4, 35, 66) einen elektrischen Widerstand (15, 123) von geeignetem Wert mit den Anschlußklemmen (8, 10) des Telefonnetzes verbinden, um den Besetzt-Zustand herzustellen.

4. Vorrichtung nach Anspruch 3, **dadurch gekennzeichnet, daß** der elektrische Widerstand (15, 123) in den Stromkreis geschaltet wird, wenn der Netzstrom unterbrochen wird.

5. Vorrichtung nach Anspruch 1, **dadurch gekennzeichnet, daß** die Erfassungseinrichtungen für das Anliegen einer Spannung an den Anschlußklemmen des elektrischen Geräts (13) eine Strahlung emittierende Einrichtung (31) aufweisen.

6. Vorrichtung nach Anspruch 5, **dadurch gekennzeichnet, daß** die Strahlung emittierende Einrichtung eine lichtemittierende Diode (31) ist.

7. Vorrichtung nach Anspruch 1, **dadurch gekennzeichnet, daß** die Steuereinrichtungen einen Phototransistor (35) aufweist.

8. Vorrichtung nach Anspruch 1, **dadurch gekennzeichnet, daß** die Erfassungseinrichtungen (31) und Steuereinrichtungen (35) von einem Optokoppler gebildet werden.

9. Vorrichtung nach Anspruch 1, **dadurch gekennzeichnet, daß** die Stromversorgung der Steuereinrichtungen (2, 31, 65) und/ oder der Umschalteinrichtungen (4, 35, 66) durch die Niederspannungstelefonleitung (8, 10) gebildet wird.

10. Vorrichtung nach Anspruch 9, **gekennzeichnet durch** Einrichtungen zur Glättung (70), zum Filtern (72, 73) und zum Stabilisieren (71) der von der Telefonleitung gelieferten Spannung.

11. Vorrichtung nach Anspruch 1, **dadurch gekennzeichnet, daß** den Erfassungseinrichtungen (62) und den Steuereinrichtungen (65) Verzögerungseinrichtungen (63, 64) zugeordnet sind.

12. Vorrichtung nach Anspruch 11, **dadurch gekennzeichnet, daß** die Verzögerungseinrichtungen (63, 64) einen Oszillator einstellbarer Frequenz aufweisen und an diesen Zähleinrichtungen (97, 99) angeschlossen sind.

13. Vorrichtung nach Anspruch 11, **gekennzeichnet durch** eine elektronische Logikschaltung (65), welche nach Ablauf einer vorgegebenen Zeit, die mit dem Ausbleiben des Netzstroms beginnt, den Lastwiderstand (123) in den Stromkreis schaltet.

14. Vorrichtung nach Anspruch 11, **gekennzeichnet durch** eine elektronische Logikschaltung (65) zur Aktivierung der Umschalteinrichtungen nach Ablauf einer vorgegebenen Zeit, die mit der ersten Netzunterbrechung nach dem Anschließen der Vorrichtung an der Telefonleitung beginnt und auch die Zeitdauern eventueller späterer Stromunterbrechungen umfaßt.

## Claims

1. Device for remotely monitoring the change of state of the mains current supply of an electrical apparatus by means of a telephone line (8, 10), characterized in that it comprises:
- means (2, 31, 62) for detecting the presence or absence of mains current at the supply terminals (12, 14) of the electrical apparatus (13),
- control means (2, 31, 65), triggered off by the detection means (2, 31, 62) when a change of state occurs in the supply of said electrical apparatus (14),
- switching means (4, 35, 66) adapted to place the telephone line (8, 10) either in a first free position or in a second engaged position,
the control means (2, 31, 65) acting on the switching means (4, 35, 66) to reverse the position of the telephone line when the detection means detect a change in state of the supply of said electrical apparatus (14) by the mains current.

2. Device according to Claim 1, characterized in that the detection means (2, 31, 62) are electrically insulated from said switching means (4, 35, 66).

3. Device according to either one of the preceding Claims, characterized in that the switching means (4, 35, 66) connect an electrical resistor (15, 123) of appropriate value to the terminals (8, 10) of the telephone network furnishing the engaged position.

4. Device according to Claim 3, characterized in that the electrical resistor (15, 123) is connected when the mains current is cut off.

5. Device according to Claim 1, characterized in that the means for detecting the presence of current at the terminals of the electrical apparatus (14) are constituted by a radiation emitter means (31).

6. Device according to Claim 5, characterized in that the radiation emitter means is a photoemissive diode (31).

7. Device according to Claim 1, characterized in that the control means comprise a phototransistor (36).

8. Device according to Claim 1, characterized in that the detection (31) and control (35) means constitute an opto-coupler.

9. Device according to Claim 1, characterized in that the electrical supply of the control (2, 31, 65) and/or switching (4, 35, 66) means is effected by the low voltage telephone line (8, 10).

10. Device according to Claim 9, characterized in that it comprises means for rectifying (70), filtering (72, 73) and stabilizing (71) the voltage furnished by the telephone line.

11. Device according to Claim 1, characterized in that the detection (62) and control (65) means are associated with time delay means (63, 64).

12. Device according to Claim 11, characterized in that the time-delay means (63, 64) are constituted by an oscillator, adjustable in frequency, supplying counting means (97, 99).

13. Device according to Claim 11, characterized in that it comprises electronic logic means (65) for ensuring connection of the load resistor (123), after a given time has lapsed whose beginning corresponds to the instant of disappearance of the mains current.

14. Device according to Claim 11, characterized in that it comprises electronic logic means (65) ensuring connection of the switching means, after a given time has lapsed, this time beginning at the instant of the first cut-off of the mains occurring after the connection of the device on the telephone line, and comprising the times relative to the possible subsequent durations of cut-off of current.
